(19)

Europäisches
Patentamt
European
Patent Office
Office européen
des brevets

(11) **EP 3 848 846 A1**

(12) **EUROPEAN PATENT APPLICATION**

(43) Date of publication:
**14.07.2021 Bulletin 2021/28**

(51) Int Cl.:
**G06F 30/25** (2020.01)          *G06F 111/10* (2020.01)

(21) Application number: **20206576.9**

(22) Date of filing: **10.11.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **10.01.2020 JP 2020002624**

(71) Applicant: **Sumitomo Heavy Industries, Ltd.
Tokyo 141-6025 (JP)**

(72) Inventor: **ISHIHARA, Sadanori
Kanagawa, 237-8555, (JP)**

(74) Representative: **Walcher, Armin
Louis, Pöhlau, Lohrentz
Patentanwälte
Postfach 30 55
90014 Nürnberg (DE)**

(54) **SIMULATION METHOD USING COARSE GRAINING, SIMULATION APPARATUS, AND PROGRAM**

(57)     Provided is a simulation apparatus that can perform analysis using an appropriate enlargement ratio (K), without making a user aware of the value of the enlargement ratio (K), when a coarse graining method is applied to analyze a solid-gas multiphase flow. A processing device (30) performs coarse graining for a plurality of particles (43) and analyzes a behavior of a solid-gas multiphase flow including a fluid and the plurality of particles, on the basis of simulation conditions input to an input device (38). The simulation conditions include a coarse graining ratio ($C_K$) indicating a ratio of an enlargement ratio (K), which defines a size relationship between a particle before the coarse graining and a particle after the coarse graining, to a reference value ($K_{ref}$), physical property values of the solid-gas multiphase flow, and physical quantities that define initial conditions and boundary conditions. The processing device (30) calculates the reference value ($K_{ref}$) of the enlargement ratio (K) on the basis of the input simulation conditions and sets a value of the enlargement ratio (K) on the basis of the reference value ($K_{ref}$) and a value of the coarse graining ratio ($C_K$) input to the input device (38). In addition, the processing device (30) performs the coarse graining for the plurality of particles (43) on the basis of the set enlargement ratio (K) and analyzes the solid-gas multiphase flow for a plurality of coarse-grained particles.

FIG. 4

EP 3 848 846 A1

**Description**

BACKGROUND OF THE INVENTION

Field of the Invention

Certain embodiments of the present invention relate to a simulation method, a simulation apparatus, and a program.

Description of Related Art

As a method for analyzing a solid-gas multiphase flow including a fluid and a plurality of particles, a DEM-CFD method is known which is a combination of a discrete element method (DEM) that analyzes the behavior of particles and a computational fluid dynamics (CFD) that analyzes the flow field of a fluid. A coarse graining method is known in which a group of particles is represented by a particle having a large particle size to reduce the number of particles, thereby reducing a calculation load (Kimiaki Washino, Chih-HungHsu, ToshihiroKawaguchi, Yutaka Tsuji, "Similarity Model for DEM Simulation of Fluidized Bed", Journal of the Society of Powder Technology, Vol. 44, No. 3, 2007, pp. 198-205 and Takato Baba, Kimiaki Washino, Takuya Tsuji, Toshitsugu Tanaka, "DEM-CFD Modeling of Two-Component Fluidized Bed Using Similarity Law", The 23rd SCEJ Symposium on Fluidization & Particle Processing, Proceedings of 12th Symposium on Advanced Reaction & Chemical Process, 2017, pp. 30-32). Specifically, physical property values and physical quantities are converted such that a governing equation is the same before and after coarse graining, and a simulation is performed for the solid-gas multiphase flow after the coarse graining.

SUMMARY OF THE INVENTION

In a case in which the solid-gas multiphase flow is analyzed by the coarse graining method according to the related art, the user needs to determine in advance the enlargement ratio which is the ratio of the particle size of a coarse-grained particle to the particle size of a real particle before coarse graining. In a case in which the enlargement ratio determined by the user is not appropriate, invalid analysis results may be obtained, or calculation may fail. The user needs to have some knowledge to determine an appropriate enlargement ratio in order to obtain appropriate analysis results without a failure in calculation.

An object of the invention is to provide a simulation apparatus, a simulation method, and a program that can perform analysis using an appropriate enlargement ratio, without making a user aware of a value of the enlargement ratio, when a coarse graining method is applied to analyze a solid-gas multiphase flow.

According to an aspect of the invention, there is provided a simulation apparatus including: an input device (38) to which simulation conditions are input; and a processing device (30) that performs coarse graining for a plurality of particles and analyzes a behavior of a solid-gas multiphase flow including a fluid and the plurality of particles, on the basis of the simulation conditions input to the input device. The simulation conditions include a coarse graining ratio ($C_K$) indicating a ratio of an enlargement ratio (K), which defines a size relationship between a particle before the coarse graining and a particle after the coarse graining, to a reference value, physical property values of the solid-gas multiphase flow, and physical quantities that define initial conditions and boundary conditions. The processing device calculates the reference value ($K_{ref}$) on the basis of the input simulation conditions, sets a value of the enlargement ratio on the basis of the reference value and a value of the coarse graining ratio input to the input device, performs the coarse graining for the plurality of particles on the basis of the set enlargement ratio, and analyzes the solid-gas multiphase flow for a plurality of coarse-grained particles.

According to another aspect of the invention, there is provided a program that causes a computer to implement: a function of performing coarse graining for a plurality of particles and analyzing a behavior of a solid-gas multiphase flow including a fluid and the plurality of particles, on the basis of simulation conditions; a function of inputting, as the simulation conditions, a coarse graining ratio indicating a ratio of an enlargement ratio, which defines a size relationship between a particle before the coarse graining and a particle after the coarse graining, to a reference value, physical property values of the solid-gas multiphase flow, and physical quantities that define initial conditions and boundary conditions; a function of calculating the reference value on the basis of the input simulation conditions; and a function of setting a value of the enlargement ratio on the basis of the reference value and a value of the input coarse graining ratio, performing the coarse graining for the plurality of particles on the basis of the set enlargement ratio, and analyzing the solid-gas multiphase flow for a plurality of coarse-grained particles.

According to yet another aspect of the invention, there is provided a simulation method that performs coarse graining for a plurality of particles and analyzes a behavior of a solid-gas multiphase flow including a fluid and the plurality of particles . The simulation method includes: allowing a simulation apparatus to calculate a reference value of an enlargement ratio which defines a size relationship between a particle before the coarse graining and a particle after the coarse graining on the basis of at least one of physical property values of the solid-gas multiphase flow and some of a plurality of physical quantities indicating analysis conditions; determining a value that is equal to or less than the reference value as a value of the enlargement ratio on the basis of the reference value; and performing the coarse graining for the plurality of particles on the basis of a set enlargement ratio and analyzing the solid-gas multiphase flow for a plurality of coarse-grained particles.

The user can perform only the operation of determining the coarse graining ratio, without being aware of the actual value of the enlargement ratio, to perform coarse graining on the basis of an appropriate enlargement ratio and to analyze the solid-gas multiphase flow.

BRIEF DESCRIPTION OF THE DRAWINGS

Fig. 1A is a schematic diagram illustrating an example of a solid-gas multiphase flow to be analyzed, and Fig. 1B is a schematic diagram illustrating an example of a solid-gas multiphase flow after coarse graining.
Fig. 2 is a chart illustrating symbols and a coarse graining conversion rule used in the specification for physical property values of particles and gases and various physical quantities defined for the particles and the gases.
Fig. 3A is a diagram schematically illustrating a container and real particles before coarse graining, and Fig. 3B is a diagram schematically illustrating a container and coarse-grained particles after coarse graining.
Fig. 4 is a block diagram illustrating a simulation apparatus according to an embodiment.
Fig. 5 is a flowchart illustrating a simulation method according to the embodiment.
Fig. 6 is a perspective view illustrating a region to be simulated.
Figs. 7A and 7B are diagrams illustrating the positions of real particles and coarse-grained particles in the solid-gas multiphase flow three seconds after the start of gas inflow, respectively.
Fig. 8 is a graph illustrating a change in gas pressure at a gas inflow boundary (the bottom of the region in Fig. 6) over time.
Fig. 9 is a chart illustrating a conversion rule different from the conversion rule illustrated in Fig. 2.

DETAILED DESCRIPTION OF THE INVENTION

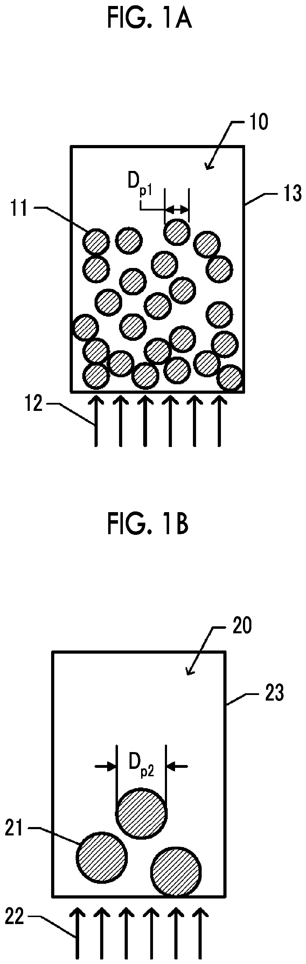

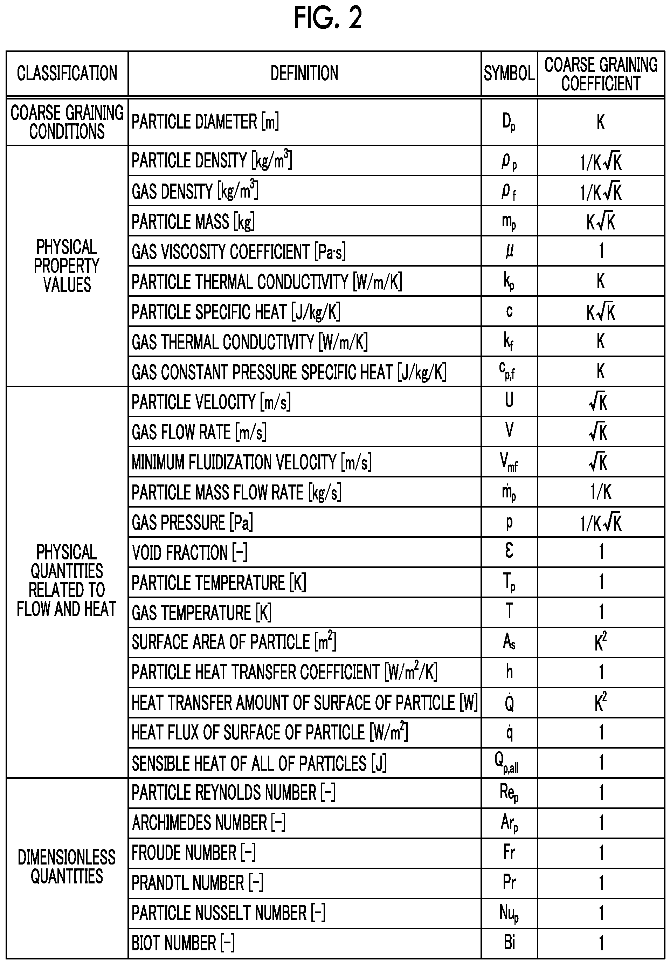

A DEM-CFD analysis method to which a coarse graining method performed by a simulation apparatus according to an embodiment is applied will be described with reference to Figs. 1A and 1B and Fig. 2.

Fig. 1A is a schematic diagram illustrating an example of a solid-gas multiphase flow to be analyzed. A region 10 to be analyzed is defined by a container 13. The behavior of the solid-gas multiphase flow formed by disposing a plurality of real particles 11 in the region 10 and introducing gas 12 into the region 10 from the bottom to the top is analyzed. The diameter of the real particle 11 is represented by $D_{p1}$.

Fig. 1B is a schematic diagram illustrating an example of a solid-gas multiphase flow after coarse graining. The real particles 11 are enlarged to obtain virtual coarse-grained particles 21. The coarse-grained particles 21 are disposed in a region 20 which is to be analyzed and is defined by a container 23. Hereinafter, it is assumed that the real particles 11 and the coarse-grained particles 21 have a spherical shape and a uniform particle size. In addition, the invention can be expanded to a case in which the real particles 11 and the coarse-grained particles 21 have a non-spherical shape and a case in which the particle sizes thereof are not constant.

The dimensions of the region 20 after coarse graining are equal to the dimensions of the region 10 before coarse graining. The diameter of the coarse-grained particles 21 is represented by $D_{p2}$. An enlargement ratio K is defined as the ratio of the diameter of the coarse-grained particle 21 after coarse graining to the diameter of the real particle 11 before the coarse graining. The enlargement ratio K is defined by the following expression.
[Expression 1]

$$D_{p2} = K \cdot D_{p1} \cdots (1)$$

The solid-gas multiphase flow after coarse graining which is formed by introducing gas 22 from the bottom to the top in the region 20 in which the coarse-grained particles 21 are disposed is analyzed by a DEM-CFD method which is a combination of CFD and DEM. At the time of coarse graining, the physical property values and various physical quantities of the real particles 11 and the gas 12 are converted such that the solid-gas multiphase flow after coarse graining and the actual solid-gas multiphase flow before coarse graining satisfy a similarity rule.

Next, a conversion rule of the physical property values and various physical quantities of the real particles 11 and the gas 12 will be described with reference to Fig. 2.

Fig. 2 is a chart illustrating symbols and a coarse graining conversion rule used in the specification for the physical property values of particles and gases and various physical quantities defined for particles and gases. The actual physical property values and physical quantities before coarse graining are multiplied by a coarse graining coefficient to obtain physical property values and physical quantities related to the solid-gas multiphase flow after coarse graining. In the specification, for example, as represented by Expression (1), a subscript "1" is given to symbols indicating the physical property values and the physical quantities before coarse graining, and a subscript "2" is given to symbols indicating the physical property values and the physical quantities after coarse graining.

The dimensionless quantities related to the solid-gas multiphase flow include the particle Reynolds number $Re_p$, the Archimedes number $Ar_p$, and the Froude number Fr. These dimensionless quantities are defined by the following expression.

[Expression 2]

$$Re_p = \frac{|\mathbf{V} - \mathbf{U}|\rho_f \varepsilon D_p}{\mu}$$

$$Ar_p = \frac{D_p^3 \rho_f (\rho_p - \rho_f) g}{\mu^2}$$

$$Fr = \frac{V}{\sqrt{gD_p}} \cdots (2)$$

Here, V indicates a gas flow rate, U indicates a particle velocity, $\rho_p$ indicates particle density, $\rho_f$ indicates gas density, $\varepsilon$ indicates a void fraction, $D_p$ indicates a particle diameter, $\mu$ indicates a gas viscosity coefficient, and g indicates gravitational acceleration. In the expression, bold letters V and U mean vectors. The void fraction $\varepsilon$ is defined by the following expression in which the total mass of the filled particles is M and the apparent volume of the region filled with particles is $V_A$.

[Expression 3]

$$\varepsilon = 1 - \frac{M}{\rho_p V_A} \cdots (3)$$

The condition that the particle Reynolds number $Re_p$, the Archimedes number $Ar_p$, and the Froude number Fr which are the dimensionless quantities related to the solid-gas multiphase flow do not change before and after coarse graining is set. Further, when the conversion rule of the physical property values and the physical quantities before and after coarse graining is calculated under the condition that the void fraction $\varepsilon$ does not change and the condition that the gas viscosity coefficient $\mu$ does not change, the following conversion rule is obtained.

[Expression 4]

$$\rho_{f2} = \frac{1}{K\sqrt{K}}\rho_{f1}$$

$$\rho_{p2} = \frac{1}{K\sqrt{K}}\rho_{p1}$$

$$V_2 = \sqrt{K}V_1$$

$$U_2 = \sqrt{K}U_1$$

$$V_{mf2} = \sqrt{K}V_{mf1} \cdots (4)$$

Here, $V_{mf}$ indicates the minimum fluidization velocity. The following conversion rule for the gas pressure p is obtained from the conversion rule of the gas density $\rho_f$.
[Expression 5]

$$p_2 = \frac{1}{K\sqrt{K}}p_1 \cdots (5)$$

The following conversion rule is obtained assuming that the apparent volume $V_A$ of the region filled with particles does not change before and after coarse graining and the number of particles is reduced to $1/K^3$ by coarse graining.
[Expression 6]

$$m_{p2} = (K\sqrt{K})m_{p1} \cdots (6)$$

Here, $m_p$ indicates the mass of particles. A particle mass flow rate $m_p$ dot is defined by the following expression in which a flow path area is A.
[Expression 7]

$$\dot{m}_p = \rho_p U A \cdots (7)$$

The following conversion rule is derived from this expression.
[Expression 8]

$$\dot{m}_{p2} = \frac{1}{K}\dot{m}_{p1} \cdots (8)$$

Further, the condition that the dimensionless quantities related to heat transport do not change before and after coarse graining is also established. The dimensionless quantities related to heat transport include the Prandtl number Pr, the particle Nusselt number $Nu_p$, and the Biot number Bi. The Prandtl number Pr, the particle Nusselt number $Nu_p$, and the Biot number Bi are defined by the following expression.
[Expression 9]

$$Pr = \frac{\mu c_{p,f}}{k_f}$$

$$Nu_p = \frac{hD_p}{k_f}$$

$$Bi = \frac{hL_p}{k_p} \cdots (9)$$

Here, $c_{p,f}$ indicate gas constant pressure specific heat, $k_f$ indicates gas thermal conductivity, $k_p$ indicates particle thermal conductivity, h indicates a particle heat transfer coefficient, and $L_p$ indicates the characteristic length of the particle. The characteristic length $L_p$ of the particle can be defined as $L_p = D_p/6$.
It is assumed that a particle temperature $T_p$ and a gas temperature T do not change before and after coarse graining in order to simplify the temperature dependence of the physical property values. Further, it is assumed that the particle heat transfer coefficient h does not change before and after coarse graining. Under this assumption, the following conversion rule is obtained.
[Expression 10]

$$k_{p2} = K \cdot k_{p1}$$

$$k_{f2} = K \cdot k_{f1}$$

$$c_{p,f2} = K \cdot c_{p,f1} \cdots (10)$$

The conversion rule of the particle specific heat c is not determined only by the above assumption. In this embodiment, the assumption that the sensible heat $Q_{p,all}$ of all of the particles does not change before and after coarse graining is introduced in order to determine the conversion rule of the particle specific heat c. The sensible heat $Q_{p,all}$ of all of the particles is defined by the following expression in which the number of particles is $N_p$ and the difference of the initial temperature of the particles from the gas temperature T introduced into the solid-gas multiphase flow is $\Delta T_p$.
[Expression 11]

$$Q_{p,all} = N_p m_p c \Delta T_p \cdots (11)$$

The number of particles $N_p$ is reduced to about $1/K^3$ by coarse graining. Therefore, when it is assumed that the sensible heat $Q_{p,all}$ of all of the particles does not change before and after coarse graining, the following conversion rule is obtained.
[Expression 12]

$$c_2 = \left( K\sqrt{K} \right) c_1 \cdots (12)$$

The heat transfer amount Q dot on the surface of the particle is defined by the following expression.
[Expression 13]

$$\dot{Q} = hA_s \left( T - T_p \right) \cdots (13)$$

Here, $A_s$ indicates the surface area of the particle. The following conversion rule for the heat transfer amount Q dot is obtained from this definition.
[Expression 14]

$$\dot{Q}_2 = K^2 \dot{Q}_1 \cdots (14)$$

The following conversion rule is obtained for the heat flux q dot on the surface of the particle.
[Expression 15]

$$\dot{q}_2 = \dot{q}_1 \cdots (15)$$

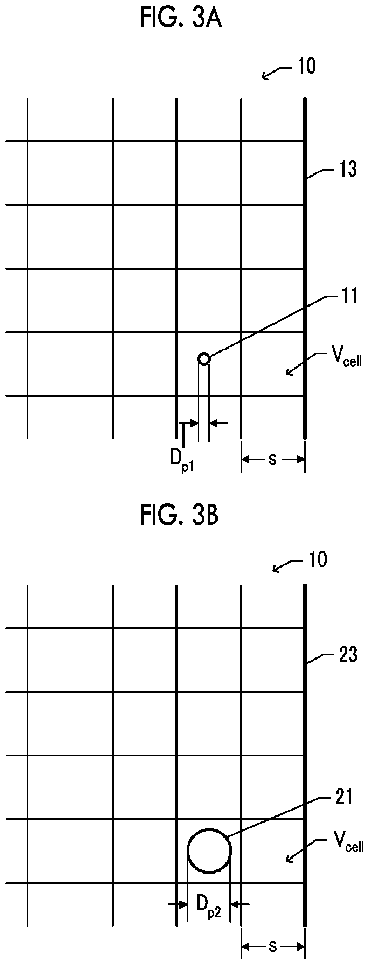

Next, a method for determining the enlargement ratio K will be described with reference to Figs. 3A and 3B.

In this embodiment, when the user determines a coarse graining ratio $C_K$ and inputs the coarse graining ratio $C_K$ to the simulation apparatus, the simulation apparatus determines the enlargement ratio K from the reference value $K_{ref}$ of the enlargement ratio and the coarse graining ratio $C_K$ on the basis of the following expression.

[Expression 16]

$$K = C_K K_{ref} \cdots (16)$$

Fig. 3A is a diagram schematically illustrating the container 13 and the real particle 11 before coarse graining, and Fig. 3B is a diagram schematically illustrating the container 23 and the coarse-grained particle 21 after coarse graining. The region 10 to be analyzed is defined in the container 13. The region 10 is divided into a plurality of elements in a mesh shape. For example, a hexahedral mesh or a tetrahedral mesh can be adopted as the mesh. The region 20 to be analyzed is defined in the container 23 after coarse graining. The region 20 is divided in a mesh shape. The mesh size is the same before and after coarse graining. The mesh size varies depending on the shape of the containers 13 and 23 or the flow field.

The minimum mesh size is represented by s. The minimum mesh size s can be defined as the length of the shortest side in all of the elements divided in the mesh shape. The volume of the smallest element is represented by $V_{cell}$. In general, the regions 10 and 20 are divided in a mesh shape such that the mesh size is relatively small in the vicinity of the wall surfaces of the containers 13 and 23 in order to improve the accuracy of analysis. Therefore, an element having a side with a length corresponding to the minimum mesh size s and an element having the minimum volume $V_{cell}$ come into contact with, for example, the wall surface.

When the coarse-grained particle 21 occupies most of the space in the mesh element, a governing equation indicating the flow field of the fluid and the behavior of the coarse-grained particle 21 is not established. The diameter $D_{p2}$ of the coarse-grained particle 21 needs to be sufficiently smaller than the minimum mesh size s in order to solve the governing equation and to analyze the solid-gas multiphase flow. Further, the volume $V_{p2}$ of the coarse-grained particle 21 needs to be sufficiently smaller than the minimum volume $V_{cell}$ of the mesh element. That is, it is preferable to determine the size of the coarse-grained particle 21 such that the following expression is established.

[Expression 17]

$$D_{p2} \ll s \cdots (17)$$

[Expression 18]

$$V_{p2} \ll \alpha_{sc} V_{cell} \cdots (18)$$

Here, $\alpha_{sc}$ indicates the upper limit of the volume fraction of solid. For example, in the case of the minimum fluidization velocity, $\alpha_{sc}$ is about 0.6.

First, the reference value $K_{ref}$ of the enlargement ratio calculated from the condition of Expression (17) will be described. Expressions (1) and (17) are rewritten as follows by using the reference value $K_{ref}$. The reference value $K_{ref}$ is considered as a standard for the upper limit of the enlargement ratio K for performing appropriate analysis.

[Expression 19]

$$K_{ref}D_{p1}=s$$

$$K \ll K_{ref} \cdots (19)$$

The minimum mesh size s is determined from, for example, the flow field or the shape of the region 10 (Fig. 1A) to be analyzed. Therefore, it is difficult to uniquely determine the minimum mesh size s. However, when the flow field is a laminar flow, the following expression is known as a guideline for determining the minimum mesh size $s_{lam}$.
[Expression 20]

$$s_{lam} = \frac{0.1}{\sqrt{Re_L}}L = 0.1\sqrt{\frac{\mu L}{\rho_f V}} \cdots (20)$$

Here, a subscript "lam" means a laminar flow. $Re_L$ indicates the Reynolds number of the flow field, and L indicates the representative length of the flow field.
In a case in which the flow field is a turbulent flow, the following expression is known as a guideline for determining the minimum mesh size $s_{turb}$.
[Expression 21]

$$s_{turb} = \frac{\mu y^+}{\rho_f V}\sqrt{\frac{2}{c_f}} \cdots (21)$$

Here, a subscript "turb" means a turbulent flow. Here, $y^+$ indicates a dimensionless distance from the wall surface, and $c_f$ indicates a friction coefficient. $y^+$ depends on the turbulence model used. In the case of a turbulence model using a standard wall function, about 30 is recommended as $y^+$ in the vicinity of the wall surface. The value of $y^+$ may be set in the simulation apparatus in advance.
The friction coefficient $c_f$ depends on the flow field. The following relational expression is known as an example.
[Expression 22]

$$c_f = 0.074 Re_L^{-0.2} \cdots (22)$$

It is possible to determine the friction coefficient $c_f$ from the Reynolds number $Re_L$ of the flow field using Expression (22).
When Expression (20) is substituted into Expression (19) and Expression (19) is rearranged, the following expression indicating the reference value $K_{ref}$ in a case in which the flow field is a laminar flow is obtained.
[Expression 23]

$$K_{ref} = \frac{0.1}{D_p}\sqrt{\frac{\mu L}{\rho_f V}} \cdots (23)$$

When Expression (21) is substituted into Expression (19) and Expression (19) is rearranged, the following expression indicating the reference value $K_{ref}$ in a case in which the flow field is a turbulent flow is obtained.
[Expression 24]

$$K_{ref} = \frac{\mu y^+}{\rho_f V D_p} \sqrt{\frac{2}{c_f}} \cdots (24)$$

The values on the right side of Expressions (23) and (24) are determined by the physical property values of the solid-gas multiphase flow or the physical quantities defining the analysis conditions. Therefore, when the physical property values of the solid-gas multiphase flow and the initial conditions of the physical quantities related to the flow field to be analyzed are determined, it is possible to obtain the reference value $K_{ref}$ using calculation. For example, when the reference value $K_{ref}$ is calculated, the initial value of the gas flow rate V may be used.
Next, the reference value $K_{ref}$ calculated from the condition of Expression (18) will be described.
When Expression (1) is represented by the volume $V_p$ of the particle, the following expression is obtained.
[Expression 25]

$$V_{p2} = K^3 \cdot V_{p1} \cdots (25)$$

Expressions (25) and (18) are rewritten as follows by using the reference value $K_{ref}$.
[Expression 26]

$$K_{ref}^3 V_{p1} = \alpha_{sc} V_{cell}$$

$$K \ll K_{ref} \cdots (26)$$

In general, the divided mesh has a complex shape. However, for simplicity, it is assumed that the region is divided into cubic meshes. Inthiscase, the minimum mesh size s and the minimum volume $V_{cell}$ have the following relationship.
[Expression 27]

$$V_{cell} = s^3 \cdots (27)$$

When Expression (20) is substituted into Expression (26) and Expression (26) is rearranged, the following expression indicating the reference value $K_{ref}$ in a case in which the flow field is a laminar flow is obtained.
[Expression 28]

$$K_{ref} = \left(\frac{6\alpha_{sc}}{\pi}\right)^{\frac{1}{3}} \frac{0.1}{D_p} \sqrt{\frac{\mu L}{\rho_f V}} \cdots (28)$$

When Expression (21) is substituted into Expression (26) and Expression (26) is rearranged, the following expression indicating the reference value $K_{ref}$ in a case in which the flow field is a turbulent flow is obtained.
[Expression 29]

$$K_{ref} = \left(\frac{6\alpha_{sc}}{\pi}\right)^{\frac{1}{3}} \frac{\mu y^+}{\rho_f V D_p} \sqrt{\frac{2}{c_f}} \cdots (29)$$

The values on the right side of Expressions (28) and (29) are determined by the physical property values of the solid-gas multiphase flow and the physical quantities defining the analysis conditions. Therefore, when the physical property values of the solid-gas multiphase flow and the initial conditions of the physical quantities related to the flow field to be analyzed are determined, it is possible to obtain the reference value $K_{ref}$ using calculation.

The difference between Expressions (23) and (28) in a case in which the flow field is a laminar flow and the difference between Expressions (24) and (29) in a case in which the flow field is a turbulent flow are only whether or not there is a coefficient $(6\alpha_{sc}/\pi)^{1/3}$. The cause of the difference is that a case in which one element of the mesh includes one coarse-grained particle 21 is assumed in Expressions (23) and (24) and a case in which a plurality of coarse-grained particles 21 are included in one element of the mesh is assumed in Expressions (28) and (29) .

For example, in a case in which one coarse-grained particle 21 having a particle size of s is included in an element of a cubic mesh having a side length of s, the volume fraction of solid is n/6. When the volume fraction upper limit $\alpha_{sc}$ of solid is n/6, Expressions (23) and (24) are the same as Expressions (28) and (29), respectively.

In practice, one element of the mesh may include more than one coarse-grained particle 21. Therefore, Expressions (28) and (29) may be applied to the calculation of the reference value $K_{ref}$. In this configuration, when 0.6 is adopted as the volume fraction upper limit $\alpha_{sc}$ in the case of the minimum fluidization velocity, the reference value $K_{ref}$ calculated by Expressions (28) and (29) is greater than the reference value $K_{ref}$ calculated by Expressions (23) and (24). Expressions (23) and (24) may be applied to calculate the reference value $K_{ref}$ in order to use the value of the safe side as the reference value $K_{ref}$.

Whether the flow field is a laminar flow or a turbulent flow may be determined on the basis of, for example, the Reynolds number $Re_L$ of the flow field. For example, the simulation apparatus may determine that the flow field is a laminar flow in a case in which the Reynolds number $Re_L$ of the flow field is less than a determination reference value and may determine that the flow field is a turbulent flow in a case in which the Reynolds number $Re_L$ is equal to or greater than the determination reference value. This determination reference value may be stored in the simulation apparatus in advance. The smaller of the reference value $K_{ref}$ in a case in which the flow field is a laminar flow and the reference value $K_{ref}$ in a case in which the flow field is a turbulent flow may be used as the reference value $K_{ref}$ applied to analysis calculation in order to use the value of the safety side as the reference value $K_{ref}$.

When the reference value $K_{ref}$ is calculated, the simulation apparatus can determine the enlargement ratio K to be used for analysis using Expression (16). The conversion rule illustrated in Fig. 2 is applied to convert the physical property values of the solid-gas multiphase flow or the physical quantities defining the analysis conditions on the basis of the determined enlargement ratio K. Further, the simulation apparatus analyzes the solid-gas multiphase flow using the converted physical property values or physical quantities.

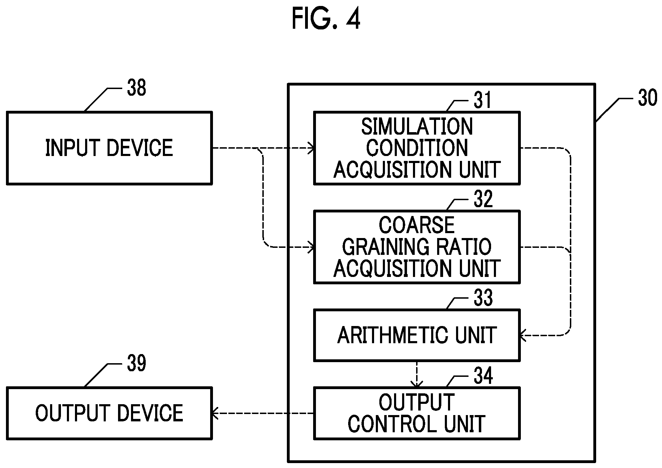

Next, the simulation apparatus according to the embodiment will be described with reference to Fig. 4.

Fig. 4 is a block diagram illustrating the simulation apparatus according to this embodiment. The simulation apparatus according to the embodiment includes a processing device 30, an input device 38, and an output device 39. The processing device 30 includes a simulation condition acquisition unit 31, a coarse graining ratio acquisition unit 32, an arithmetic unit 33, and an output control unit 34.

Each block illustrated in Fig. 4 can be implemented by an element, such as a central processing unit (CPU) of a computer, or a mechanical device in terms of hardware, and can be implemented by, for example, a computer program in terms of software. Fig. 4 illustrates functional blocks implemented by the cooperation of hardware and software. Therefore, these functional blocks can be implemented in various ways by a combination of hardware and software.

The processing device 30 is connected to the input device 38 and the output device 39. Commands and data from the user which are related to the processes performed by the processing device 30 are input to the input device 38. For example, a keyboard or a mouse that is operated by the user to input information, a communication device that inputs information through a network, such as the Internet, and a reading device that inputs information from a recording medium, such as a CD, a DVD, or an SD card, can be used as the input device 38.

The simulation condition acquisition unit 31 acquires simulation conditions through the input device 38. The simulation conditions include various kinds of information required for simulations. For example, the simulation conditions include the physical property values of the solid-gas multiphase flow to be simulated, the initial conditions of the physical quantities related to the flow field or heat for defining the analysis conditions, information for defining an analysis region and a mesh shape, the representative length of the flow field, boundary conditions, and the coarse graining ratio. The physical property values of the solid-gas multiphase flow include, for example, the physical property values illustrated in Fig. 2. The physical quantities related to the flow field or heat include, for example, the physical quantities illustrated in Fig. 2.

The coarse graining ratio acquisition unit 32 acquires the value of the coarse graining ratio which is one of the simulation conditions input through the input device 38.

The arithmetic unit 33 calculates the reference value $K_{ref}$ of the enlargement ratio on the basis of the simulation conditions acquired by the simulation condition acquisition unit 31. Specifically, the arithmetic unit 33 calculates the reference value $K_{ref}$ using Expression (23) or Expression (28) in a case in which the flow field is a laminar flow and calculates the reference value $K_{ref}$ using Expression (24) or Expression (29) in a case in which the flow field is a turbulent flow.

The arithmetic unit 33 determines the enlargement ratio K using Expression (16) on the basis of the calculated reference value $K_{ref}$ and the coarse graining ratio $C_K$ acquired by the coarse graining ratio acquisition unit 32. Further, when the conversion rule illustrated in Fig. 2 is applied, the physical property values of the solid-gas multiphase flow and the physical quantities related to the flow field or heat are converted using the value of the enlargement ratio K. Then, the solid-gas multiphase flow is analyzed by the DEM-CFD method using the converted physical property values or physical quantities. Furthermore, the arithmetic unit 33 converts the physical quantities related to the flow field or heat of the solid-gas multiphase flow during analysis or at the time of the end of analysis into the actual values using the conversion rule illustrated in Fig. 2.

The output control unit 34 outputs the analysis results obtained by the arithmetic unit 33 or information in the intermediate stage of analysis to the output device 39. For example, the position and temperature of the coarse-grained particle 21 and the temperature distribution of the gas in the intermediate stage of analysis are graphically displayed on a display screen of the output device 39. It is possible to acquire information related to the position and temperature of the coarse-grained particle 21 and a variation in the temperature distribution of the gas over time from these information items in the intermediate stage of analysis.

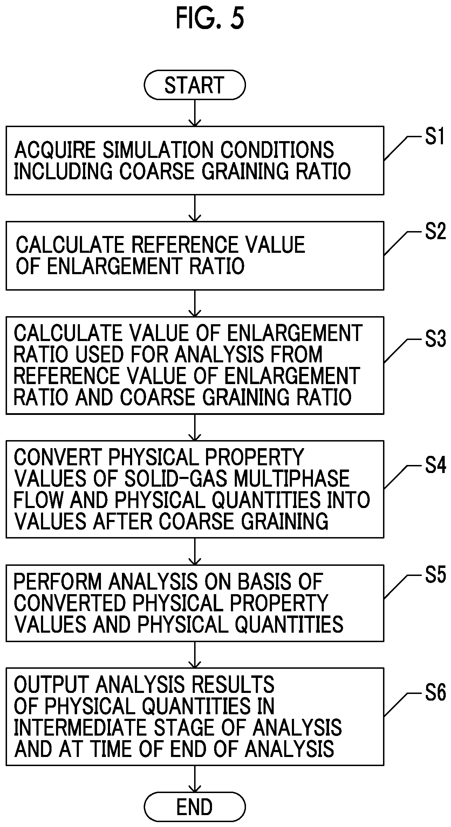

Next, a simulation method according to the embodiment will be described with reference to Fig. 5.

Fig. 5 is a flowchart illustrating the simulation method according to the embodiment. The processing device 30 (Fig. 4) of the simulation apparatus executes a program to implement each step illustrated in the flowchart.

First, the processing device 30 acquires the simulation conditions including the coarse graining ratio $C_K$ from the input device 38 (Step S1). Next, the processing device 30 calculates the reference value $K_{ref}$ of the enlargement ratio K from the simulation conditions (Step S2). Then, the value of the enlargement ratio K used for analysis is calculated from the reference value $K_{ref}$ and the coarse graining ratio $C_K$ (Step S3). When the enlargement ratio K is calculated, the processing device 30 applies the conversion rule to convert the physical property values of the solid-gas multiphase flow and the physical quantities related to the flow field or heat into values after coarse graining (Step S4) .

When the converted values of the physical property values and the physical quantities are calculated, the processing device 30 analyzes the solid-gas multiphase flow on the basis of the converted values of the physical property values and the physical quantities (Step S5). The processing device 30 outputs various kinds of information in the intermediate stage of analysis, for example, the physical quantities related to the flow field or heat of the solid-gas multiphase flow and the analysis results to the output device 39 (Step S6).

Next, the excellent effect of the above-described embodiment will be described.

In the above-described embodiment, the user does not input the value of the enlargement ratio K to be used for analysis and inputs the coarse graining ratio $C_K$. In a case in which the user inputs the value of the enlargement ratio K, the input value of the enlargement ratio K may be greater than the reference value $K_{ref}$ for appropriate analysis. The user needs to have some specialized knowledge in order to appropriately determine the value of the enlargement ratio K to be input.

In contrast, in this embodiment, the user need not be aware of the reference value $K_{ref}$ for appropriate analysis and may input the coarse graining ratio $C_K$. The coarse graining ratio $C_K$ is, for example, a value that is greater than 0 and equal to or less than 1. The enlargement ratio K determined by the simulation apparatus changes between 0 and the reference value $K_{ref}$, depending on the magnitude of the coarse graining ratio $C_K$. Therefore, even the user who does not have specialized knowledge to calculate the reference value $K_{ref}$ can perform analysis using the appropriate enlargement ratio K.

As the coarse graining ratio $C_K$ becomes closer to 1 from 0, the enlargement ratio K determined by the simulation apparatus becomes larger. Even when a computation load increases, the coarse graining ratio $C_K$ may be brought close to 0 in a case in which the user wants to increase the accuracy of analysis. In a case in which the user wants to minimize the computation load, the coarse graining ratio $C_K$ may be brought close to 1.

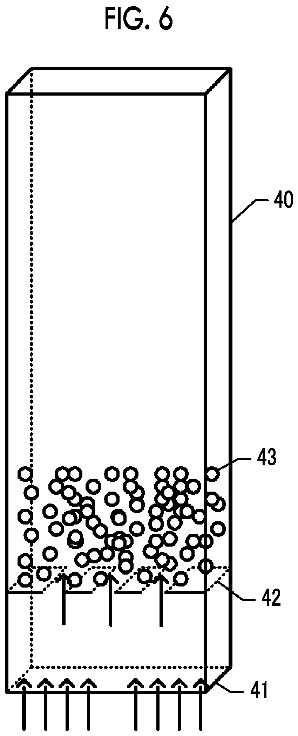

Next, the simulation performed to confirm the effect of the above-described embodiment and the result of the simulation will be described with reference to Figs. 6 to 8.

Fig. 6 is a perspective view illustrating a region 40 to be simulated. The region 40 to be simulated is a rectangular parallelepiped that is long in the height direction. The length (the depth direction in Fig. 6), width (the horizontal direction in Fig. 6), and height of the region 40 are 15 mm, 100 mm, and 450 mm, respectively. A partition plate 42 is disposed at a certain height from the bottom of the region 40. The partition plate 42 is provided with three openings. Gas is introduced into the region 40 from the bottom of the region 40. The bottom of the region 40 corresponds to an inflow boundary that defines gas inflow conditions. The introduced gas flows upward through the openings provided in the partition plate 42. As an initial condition, a plurality of particles 43 are disposed in a region above the partition plate 42.

The following values were used as the initial conditions of the physical property values of the solid-gas multiphase flow before coarse graining and the physical quantities of the flow field:

Particle size $D_{p1}$ = 0.55 mm;
Particle density $\rho_{p1}$ = 2500 kg/m$^3$;
Gas density $\rho_{f1}$ = 1.188 kg/m$^3$;
Gas viscosity coefficient $\mu_1$ = 1.824 $\times$ 10$^{-5}$ Pa•s;
Gas flow rate $V_1$ = 1.000 m/s; and
Number of particles $N_{p1}$ = 800,000.

Under this condition, assuming that the representative length L of the flow field is 100 mm which is the length of the region 40 in the horizontal direction, the reference value $K_{ref}$ calculated using Expression (24) is about 10.5. Coarse graining was performed with the coarse graining ratio $C_K$ set to 0.19. When the coarse graining ratio $C_K$ is 0.19, the enlargement ratio K used for the analysis is about 2. When the enlargement ratio K is 2 and conversion is performed on the basis of the conversion rule illustrated in Fig. 2, the following values are obtained as the physical property values of the solid-gas multiphase flow and the initial conditions of the physical quantities of the flow field:

Particle size $D_{p2}$ = 1.1 mm;
Particle density $\rho_{p2}$ = 883.9 kg/m$^3$;
Gas density $\rho_{f2}$ = 0.4200 kg/m$^3$;
Gas viscosity coefficient $\mu_2$ = 1.824 $\times$ 10$^{-5}$ Pa$\beta$•s;
Gas flow rate $V_2$ = 1.414 m/s; and
Number of particles $N_{p2}$ = 100,000.

The gravitational acceleration g was the same before and after the conversion and was set to 9.81 m/s$^2$.

Under the above conditions, a solid-gas multiphase flow including real particles and a solid-gas multiphase flow including coarse-grained particles were analyzed. The analysis was performed in a cold state in which the temperatures of the particles and gas did not change.

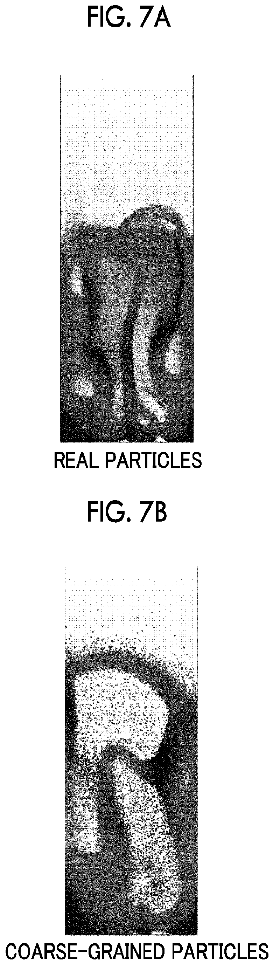

Figs. 7A and 7B are diagrams illustrating the positions of the real particles and the coarse-grained particles in the solid-gas multiphase flow three seconds after the start of gas inflow, respectively. In Figs. 7A and 7B, particles having a relatively low velocity are represented relatively densely. In each case, it was confirmed that the particles were fluidized by the inflow of gas and moved upward in the analysis region.

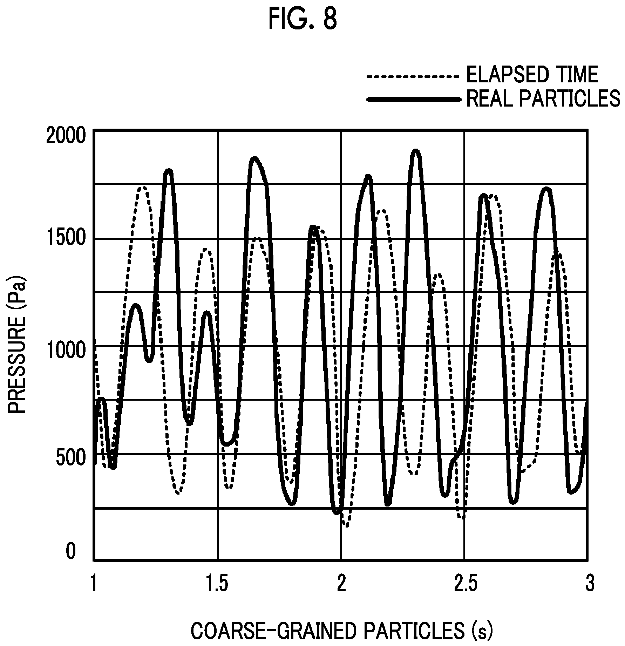

Fig. 8 is a graph illustrating a change in gas pressure at the gas inflow boundary (the bottom of the region 40 in Fig. 6) over time. The horizontal axis indicates the elapsed time in the unit of "second", and the vertical axis indicates pressure in the unit of "Pa". In Fig. 8, a dashed line and a solid line indicate the gas pressures of the solid-gas multiphase flow including the real particles and the solid-gas multiphase flow including the coarse-grained particles, respectively. Fig. 8 shows that the time average or amplitude of the gas pressure calculated in the solid-gas multiphase flow including the coarse-grained particles is close to the time average or amplitude of the gas pressure calculated in the solid-gas multiphase flow including the real particles.

As illustrated in Figs. 7A to 8, it was confirmed that the solid-gas multiphase flow including the coarse-grained particles could sufficiently reproduce the solid-gas multiphase flow including the real particles. In addition, since the number of coarse-grained particles is about 1/8 times the number of real particles, the calculation time can be shortened to 1/8 by coarse graining.

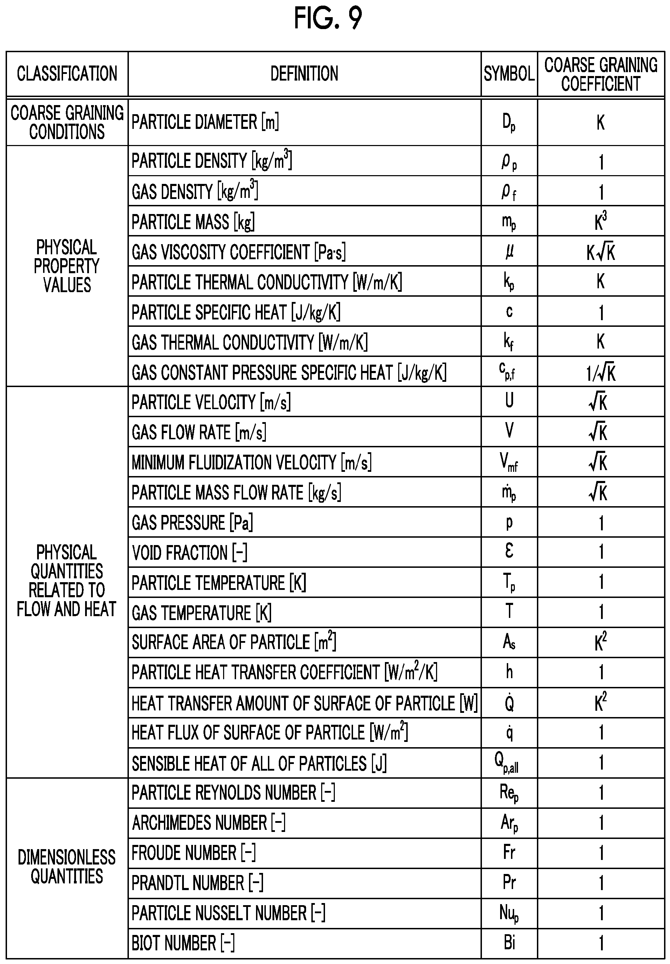

Next, a modification example of the above-described embodiment will be described with reference to Fig. 9. In the above-described embodiment, coarse graining is performed for the real particles using the conversion rule illustrated in Fig. 2. However, other conversion rules may be used.

Fig. 9 is a chart illustrating another conversion rule. Hereinafter, the description will be made while comparing with the conversion rule illustrated in Fig. 2.

The conversion rule is the same as the conversion rule illustrated in Fig. 2 in that the dimensionless quantities related to the solid-gas multiphase flow and the dimensionless quantities related to heat transport do not change before and after coarse graining. In addition, the conversion rule is the same as the conversion rule illustrated in Fig. 2 in that the particle temperature $T_p$, the gas temperature T, and the particle heat transfer coefficient h do not change before and after coarse graining.

In the conversion rule illustrated in Fig. 2, it is assumed that the gas viscosity coefficient $\mu$ does not change before and after coarse graining. However, in the conversion rule illustrated in Fig. 9, it is assumed that the particle density $\rho_p$ and the gas density $\rho_f$ do not change before and after coarse graining. Under this assumption, when the sensible heat $Q_{p,all}$ of all of the particles does not change before and after coarse graining, the particle specific heat c also does not change before and after coarse graining. Furthermore, the gas pressure p also does not change before and after coarse graining.

The conversion rule illustrated in Fig. 9 is different from the conversion rule illustrated in Fig. 2 in the particle mass $m_p$, the gas viscosity coefficient u, the particle specific heat c, the gas constant pressure specific heat $c_{p,f}$, and the particle mass flow rate $m_p$ dot. The physical property values and physical quantities of the particles and the gas may be converted using the conversion rule illustrated in Fig. 9, and the simulation may be performed.

Next, another modification example of the above-described embodiment will be described.

In the simulation apparatus according to the above-described embodiment, the user inputs the coarse graining ratio $C_K$. However, a simulation apparatus according to the modification example outputs the reference value $K_{ref}$ obtained by calculation to the output device 39. After checking the output reference value $K_{ref}$, the user inputs a value that is equal to or less than the reference value $K_{ref}$ to the input device 38 as the enlargement ratio K used for analysis.

In this embodiment, the user can check the reference value $K_{ref}$ which is a standard for the upper limit of the enlargement ratio K, the enlargement ratio K may be selected from the range that is equal to or less than the reference value $K_{ref}$. Therefore, even in this embodiment, the user does not need to have sufficient specialized knowledge to calculate the reference value $K_{ref}$.

In the above-described embodiment, the case in which the real particles have a spherical shape and a uniform size has been described. However, the idea of the above-described embodiment can also be applied to a case in which the real particles have a non-spherical shape or a case in which the particle size has a distribution.

For example, the above-described embodiment can also be applied to a case in which the real particle has a spheroid (prolate spheroid) shape obtained by rotating an ellipse on its major axis or a spheroid (oblate spheroid) shape obtained by rotating an ellipse on its minor axis. In this case, the length of the major axis of the ellipse may be used instead of $D_{p1}$ in Expression (19). In a case in which the particle size of the real particles has a distribution, the maximum value of the particle size may be used as $D_{p1}$ in Expression (19).

It goes without saying that the above-described embodiment and modification examples are illustrative and the configurations described in the embodiment and modification examples can be partially replaced or combined. Similar operations and effects obtained by the same configuration in the embodiment and the modification examples will not be mentioned sequentially for each embodiment. In addition, the invention is not limited to the above-described embodiment. For example, it will be apparent to those skilled in the art that various modifications, improvements, combinations, and the like can be made.

Brief Description of the Reference Symbols

10      Region to be analyzed
11      Real particle
12      Gas
13      Container
20      Region to be analyzed
21      Coarse-grained particle
22      Gas
23      Container
30      Processing device
31      Simulation condition acquisition unit
32      Coarse graining ratio acquisition unit
33      Arithmetic unit
34      Output control unit
38      Input device
39      Output device
40      Region

42    Partition plate
43    Particle

**Claims**

**1.**   A simulation apparatus comprising:

an input device (38) to which simulation conditions are input; and
a processing device (30) that performs coarse graining for a plurality of particles (43) and analyzes abehaviorof a solid-gas multiphase flow including a fluid and the plurality of particles, on the basis of the simulation conditions input to the input device (38),
wherein the simulation conditions include a coarse graining ratio ($C_K$) indicating a ratio of an enlargement ratio (K), which defines a size relationship between a particle before the coarse graining and a particle after the coarse graining, to a reference value ($K_{ref}$), physical property values of the solid-gas multiphase flow, and physical quantities that define initial conditions and boundary conditions,
the processing device (30) calculates the reference value ($K_{ref}$) on the basis of the input simulation conditions, sets a value of the enlargement ratio (K) on the basis of the reference value ($K_{ref}$) and a value of the coarse graining ratio ($C_K$) input to the input device (38), performs the coarse graining for the plurality of particles (43) on the basis of the set enlargement ratio (K), and analyzes the solid-gas multiphase flow for a plurality of coarse-grained particles.

**2.**   The simulation apparatus according to claim 1,

wherein the simulation conditions include a particle size of the particles before the coarse graining, a viscosity coefficient of the fluid, density of the fluid, an initial value of a flow rate of the fluid, and a representative length of a flow field, and
the processing device (3) calculates the reference value ($K_{ref}$) using the particle size of the particles before the coarse graining, the viscosity coefficient of the fluid, the density of the fluid, the initial value of the flow rate of the fluid, and a representative length of an analysis region.

**3.**   A program that causes a computer to implement:

a function of performing coarse graining for a plurality of particles (43) and analyzing a behavior of a solid-gas multiphase flow including a fluid and the plurality of particles, on the basis of simulation conditions;
a function of inputting, as the simulation conditions, a coarse graining ratio ($C_K$) indicating a ratio of an enlargement ratio (K), which defines a size relationship between a particle before the coarse graining and a particle after the coarse graining, to a reference value ($K_{ref}$), physical property values of the solid-gas multiphase flow, and physical quantities that define initial conditions and boundary conditions;
a function of calculating the reference value ($K_{ref}$) on the basis of the input simulation conditions; and
a function of setting a value of the enlargement ratio (K) on the basis of the reference value ($K_{ref}$) and a value of the input coarse graining ratio ($C_K$), performing the coarse graining for the plurality of particles (43) on the basis of the set enlargement ratio (K), and analyzing the solid-gas multiphase flow for a plurality of coarse-grained particles.

**4.**   The program according to claim 3,

wherein the simulation conditions include a particle size of the particles before the coarse graining, a viscosity coefficient of the fluid, density of the fluid, an initial value of a flow rate of the fluid, and a representative length of an analysis region, and
the reference value ($K_{ref}$) is calculated using the particle size of the particles before the coarse graining, the viscosity coefficient of the fluid, the density of the fluid, the initial value of the flow rate of the fluid, and the representative length of the analysis region.

**5.**   A simulation method that performs coarse graining for a plurality of particles (43) and analyzes a behavior of a solid-gas multiphase flow including a fluid and the plurality of particles, the method comprising:

allowing a simulation apparatus to calculate a reference value ($K_{ref}$) of an enlargement ratio (K) which defines a size relationship between a particle before the coarse graining and a particle after the coarse graining on the basis of at least one of physical property values of the solid-gas multiphase flow and some of a plurality of physical quantities indicating analysis conditions;

determining a value that is equal to or less than the reference value ($K_{ref}$) as a value of the enlargement ratio (K) on the basis of the reference value ($K_{ref}$); and

performing the coarse graining for the plurality of particles (43) on the basis of a set enlargement ratio (K) and analyzing the solid-gas multiphase flow for a plurality of coarse-grained particles.

6. The simulation method according to claim 5,
   wherein the reference value ($K_{ref}$) is calculated using a particle size of the particle before the coarse graining, a viscosity coefficient of the fluid, density of the fluid, an initial value of a flow rate of the fluid, and a representative length of an analysis region.

# FIG. 1A

# FIG. 1B

## FIG. 2

| CLASSIFICATION | DEFINITION | SYMBOL | COARSE GRAINING COEFFICIENT |
|---|---|---|---|
| COARSE GRAINING CONDITIONS | PARTICLE DIAMETER [m] | $D_p$ | $K$ |
| PHYSICAL PROPERTY VALUES | PARTICLE DENSITY [kg/m³] | $\rho_p$ | $1/K\sqrt{K}$ |
| | GAS DENSITY [kg/m³] | $\rho_f$ | $1/K\sqrt{K}$ |
| | PARTICLE MASS [kg] | $m_p$ | $K\sqrt{K}$ |
| | GAS VISCOSITY COEFFICIENT [Pa·s] | $\mu$ | $1$ |
| | PARTICLE THERMAL CONDUCTIVITY [W/m/K] | $k_p$ | $K$ |
| | PARTICLE SPECIFIC HEAT [J/kg/K] | $c$ | $K\sqrt{K}$ |
| | GAS THERMAL CONDUCTIVITY [W/m/K] | $k_f$ | $K$ |
| | GAS CONSTANT PRESSURE SPECIFIC HEAT [J/kg/K] | $c_{p,f}$ | $K$ |
| PHYSICAL QUANTITIES RELATED TO FLOW AND HEAT | PARTICLE VELOCITY [m/s] | $U$ | $\sqrt{K}$ |
| | GAS FLOW RATE [m/s] | $V$ | $\sqrt{K}$ |
| | MINIMUM FLUIDIZATION VELOCITY [m/s] | $V_{mf}$ | $\sqrt{K}$ |
| | PARTICLE MASS FLOW RATE [kg/s] | $\dot{m}_p$ | $1/K$ |
| | GAS PRESSURE [Pa] | $p$ | $1/K\sqrt{K}$ |
| | VOID FRACTION [-] | $\varepsilon$ | $1$ |
| | PARTICLE TEMPERATURE [K] | $T_p$ | $1$ |
| | GAS TEMPERATURE [K] | $T$ | $1$ |
| | SURFACE AREA OF PARTICLE [m²] | $A_s$ | $K^2$ |
| | PARTICLE HEAT TRANSFER COEFFICIENT [W/m²/K] | $h$ | $1$ |
| | HEAT TRANSFER AMOUNT OF SURFACE OF PARTICLE [W] | $\dot{Q}$ | $K^2$ |
| | HEAT FLUX OF SURFACE OF PARTICLE [W/m²] | $\dot{q}$ | $1$ |
| | SENSIBLE HEAT OF ALL OF PARTICLES [J] | $Q_{p,all}$ | $1$ |
| DIMENSIONLESS QUANTITIES | PARTICLE REYNOLDS NUMBER [-] | $Re_p$ | $1$ |
| | ARCHIMEDES NUMBER [-] | $Ar_p$ | $1$ |
| | FROUDE NUMBER [-] | $Fr$ | $1$ |
| | PRANDTL NUMBER [-] | $Pr$ | $1$ |
| | PARTICLE NUSSELT NUMBER [-] | $Nu_p$ | $1$ |
| | BIOT NUMBER [-] | $Bi$ | $1$ |

## FIG. 3A

10

13

11

$V_{cell}$

$D_{p1}$

s

## FIG. 3B

10

23

21

$V_{cell}$

$D_{p2}$

s

FIG. 4

INPUT DEVICE — 38

SIMULATION CONDITION ACQUISITION UNIT — 31

COARSE GRAINING RATIO ACQUISITION UNIT — 32

ARITHMETIC UNIT — 33

OUTPUT DEVICE — 39

OUTPUT CONTROL UNIT — 34

— 30

# FIG. 5

```
        ┌─────────┐
        │  START  │
        └─────────┘
             │
             ▼
┌──────────────────────────────────┐
│ ACQUIRE SIMULATION CONDITIONS     │──S1
│ INCLUDING COARSE GRAINING RATIO   │
└──────────────────────────────────┘
             │
             ▼
┌──────────────────────────────────┐
│ CALCULATE REFERENCE VALUE         │──S2
│ OF ENLARGEMENT RATIO              │
└──────────────────────────────────┘
             │
             ▼
┌──────────────────────────────────┐
│ CALCULATE VALUE OF ENLARGEMENT    │──S3
│ RATIO USED FOR ANALYSIS FROM      │
│ REFERENCE VALUE OF ENLARGEMENT    │
│ RATIO AND COARSE GRAINING RATIO   │
└──────────────────────────────────┘
             │
             ▼
┌──────────────────────────────────┐
│ CONVERT PHYSICAL PROPERTY         │──S4
│ VALUES OF SOLID-GAS MULTIPHASE    │
│ FLOW AND PHYSICAL QUANTITIES INTO │
│ VALUES AFTER COARSE GRAINING      │
└──────────────────────────────────┘
             │
             ▼
┌──────────────────────────────────┐
│ PERFORM ANALYSIS ON BASIS OF      │──S5
│ CONVERTED PHYSICAL PROPERTY       │
│ VALUES AND PHYSICAL QUANTITIES    │
└──────────────────────────────────┘
             │
             ▼
┌──────────────────────────────────┐
│ OUTPUT ANALYSIS RESULTS           │──S6
│ OF PHYSICAL QUANTITIES IN         │
│ INTERMEDIATE STAGE OF ANALYSIS    │
│ AND AT TIME OF END OF ANALYSIS    │
└──────────────────────────────────┘
             │
             ▼
        ┌─────────┐
        │   END   │
        └─────────┘
```

# FIG. 6

FIG. 7A

REAL PARTICLES

FIG. 7B

COARSE-GRAINED PARTICLES

# FIG. 8

# FIG. 9

| CLASSIFICATION | DEFINITION | SYMBOL | COARSE GRAINING COEFFICIENT |
|---|---|---|---|
| COARSE GRAINING CONDITIONS | PARTICLE DIAMETER [m] | $D_p$ | $K$ |
| PHYSICAL PROPERTY VALUES | PARTICLE DENSITY [kg/m³] | $\rho_p$ | 1 |
| | GAS DENSITY [kg/m³] | $\rho_f$ | 1 |
| | PARTICLE MASS [kg] | $m_p$ | $K^3$ |
| | GAS VISCOSITY COEFFICIENT [Pa·s] | $\mu$ | $K\sqrt{K}$ |
| | PARTICLE THERMAL CONDUCTIVITY [W/m/K] | $k_p$ | $K$ |
| | PARTICLE SPECIFIC HEAT [J/kg/K] | $c$ | 1 |
| | GAS THERMAL CONDUCTIVITY [W/m/K] | $k_f$ | $K$ |
| | GAS CONSTANT PRESSURE SPECIFIC HEAT [J/kg/K] | $c_{p,f}$ | $1/\sqrt{K}$ |
| PHYSICAL QUANTITIES RELATED TO FLOW AND HEAT | PARTICLE VELOCITY [m/s] | $U$ | $\sqrt{K}$ |
| | GAS FLOW RATE [m/s] | $V$ | $\sqrt{K}$ |
| | MINIMUM FLUIDIZATION VELOCITY [m/s] | $V_{mf}$ | $\sqrt{K}$ |
| | PARTICLE MASS FLOW RATE [kg/s] | $\dot{m}_p$ | $\sqrt{K}$ |
| | GAS PRESSURE [Pa] | $p$ | 1 |
| | VOID FRACTION [-] | $\varepsilon$ | 1 |
| | PARTICLE TEMPERATURE [K] | $T_p$ | 1 |
| | GAS TEMPERATURE [K] | $T$ | 1 |
| | SURFACE AREA OF PARTICLE [m²] | $A_s$ | $K^2$ |
| | PARTICLE HEAT TRANSFER COEFFICIENT [W/m²/K] | $h$ | 1 |
| | HEAT TRANSFER AMOUNT OF SURFACE OF PARTICLE [W] | $\dot{Q}$ | $K^2$ |
| | HEAT FLUX OF SURFACE OF PARTICLE [W/m²] | $\dot{q}$ | 1 |
| | SENSIBLE HEAT OF ALL OF PARTICLES [J] | $Q_{p,all}$ | 1 |
| DIMENSIONLESS QUANTITIES | PARTICLE REYNOLDS NUMBER [-] | $Re_p$ | 1 |
| | ARCHIMEDES NUMBER [-] | $Ar_p$ | 1 |
| | FROUDE NUMBER [-] | $Fr$ | 1 |
| | PRANDTL NUMBER [-] | $Pr$ | 1 |
| | PARTICLE NUSSELT NUMBER [-] | $Nu_p$ | 1 |
| | BIOT NUMBER [-] | $Bi$ | 1 |

Europäisches
Patentamt

European
Patent Office

Office européen
des brevets

**EUROPEAN SEARCH REPORT**

Application Number

EP 20 20 6576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GE ET AL: "Analytical multi-scale method for multi-phase complex systems in process engineering-Bridging reductionism and holism", CHEMICAL ENGINEERING SCIENCE, OXFORD, GB, vol. 62, no. 13, 2 June 2007 (2007-06-02), pages 3346-3377, XP022104085, ISSN: 0009-2509 * the whole document * * page 3368, column 1, paragraph 2 * * page 3368, column 2, paragraph 2 - page 3370, column 1, paragraph 3 * * page 3354, column 1, last paragraph - column 2, paragraph 1 * ----- | 1-6 | INV. G06F30/25 ADD. G06F111/10 |
| X | JP 2010 107314 A (IHI CORP; UNIV TOKYO) 13 May 2010 (2010-05-13) * the whole document * * paragraph [0020] * * paragraph [0022] * * paragraphs [0003] - [0005] * ----- | 1-6 | |
| X | WANG ET AL: "Length scale dependence of effective inter-phase slip velocity and heterogeneity in gas-solid suspensions", CHEMICAL ENGINEERING SCIENCE, OXFORD, GB, vol. 63, no. 8, 21 January 2008 (2008-01-21), pages 2294-2298, XP022547190, ISSN: 0009-2509, DOI: 10.1016/J.CES.2008.01.021 * the whole document * * page 2294, column 1, paragraph 1 - column 2, paragraph 2 * * page 2296, column 2, paragraph 2 - page 2297, column 2, paragraph 1 * ----- | 1-6 | TECHNICAL FIELDS SEARCHED (IPC) G06F |

The present search report has been drawn up for all claims

| Place of search | Date of completion of the search | Examiner |
|---|---|---|
| Munich | 14 April 2021 | Wellisch, J |

EPO FORM 1503 03.82 (P04C01)

## ANNEX TO THE EUROPEAN SEARCH REPORT
## ON EUROPEAN PATENT APPLICATION NO.

EP 20 20 6576

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2021

| Patent document cited in search report | Publication date | Patent family member(s) | Publication date |
|---|---|---|---|
| JP 2010107314 A | 13-05-2010 | JP 5527572 B2<br>JP 2010107314 A | 18-06-2014<br>13-05-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **KIMIAKI WASHINO ; CHIH-HUNGHSU ; TOSHIHIROKAWAGUCHI ; YUTAKA TSUJI.** Similarity Model for DEM Simulation of Fluidized Bed. *Journal of the Society of Powder Technology,* 2007, vol. 44 (3), 198-205 **[0002]**
- **TAKATO BABA ; KIMIAKI WASHINO ; TAKUYA TSUJI ; TOSHITSUGU TANAKA.** DEM-CFD Modeling of Two-Component Fluidized Bed Using Similarity Law. *The 23rd SCEJ Symposium on Fluidization & Particle Processing, Proceedings of 12th Symposium on Advanced Reaction & Chemical Process,* 2017, 30-32 **[0002]**